Europäisches Patentamt

(19) European Patent Office

Office européen des brevets

(11) Veröffentlichungsnummer: **0 248 219**
**B1**

(12) **EUROPÄISCHE PATENTSCHRIFT**

(45) Veröffentlichungstag der Patentschrift:
**09.08.89**

(21) Anmeldenummer: **87106456.4**

(22) Anmeldetag: **05.05.87**

(51) Int. Cl.⁴: **F16C 11/06**

(54) **Kugelgelenk.**

(30) Priorität: **05.06.86 DE 3619003**

(43) Veröffentlichungstag der Anmeldung:
**09.12.87 Patentblatt 87/50**

(45) Bekanntmachung des Hinweises auf die Patenterteilung:
**09.08.89 Patentblatt 89/32**

(84) Benannte Vertragsstaaten:
**DE FR GB IT**

(56) Entgegenhaltungen:
**DE-A- 1 953 116**
**DE-B- 2 434 490**
**FR-A- 1 094 384**
**GB-A- 2 052 619**

(73) Patentinhaber: **TRW Ehrenreich GmbH & Co. KG,**
**Hansa-Allee 190, D-4000 Düsseldorf 11(DE)**

(72) Erfinder: **Ito, Eiichi, Feldstrasse 22,**
**D-4005 Meerbusch 1(DE)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11(DE)**

## Beschreibung

Gegenstand der Erfindung ist ein Kugelgelenk für Übertragungsgestänge in Kraftfahrzeugen mit einer zwischen einem Kugelkopf und einem Gelenkgehäuse angeordneten Lagerschale aus Kunststoff, wobei die einen Radialdruck auf den Kugelkopf ausübende Lagerschale eine Außenschale mit einer sphärischen Innenfläche und eine Innenschale mit ebenfalls sphärischer Innenfläche hat und die Innenflächen eine Gleitfläche für den Kugelkopf bilden, wobei die Außenschale die Innenschale in einer Ausnehmung trägt und wobei die Innenschale aus einem weichelastischen Kunststoff besteht und solche Abmessungen hat, daß sie bei nicht eingesetztem Kugelkopf in eine, von der Innenfläche der Außenschale definierte Kugel hineinragt und bei eingesetztem Kugelkopf elastisch verformt ist.

Aus der US-PS 42 97 047 ist bereits ein Kugelgelenk mit einer zweiteiligen Lagerschale bekannt, die aus einer in das Gelenkgehäuse eingesetzten, den Kugelkopf an ihrer zapfenseitigen Öffnung stützenden, topfförmigen Außenschale und einer in diese Außenschale eingesetzten, den Kugelkopf im Polbereich stützenden Innenschale besteht. Die Innenschale aus einem weichelastischen Kunststoff ist auf bodenseitigen Erhebungen der ebenfalls aus einem weichelastischen Kunststoff hergestellten Außenschale abgestützt. Beim Einrollen des Randes der Gehäuseöffnung werden die Erhebungen elastisch verformt, wobei die in ihnen gespeicherte Kraft den Kugelkopf vorspannt.

Bei dieser bekannten Konstruktion wird jedoch die Verformung der Erhebungen in erheblichem Maße von Maßtoleranzen der Gehäuseinnenbohrung und der Außenschale mitbestimmt, so daß die Toleranz der Vorspannung des Kugelkopfes ebenfalls verhältnismäßig groß ist. Darüber hinaus kann die vorbekannte Außenschale bei einer Drehung des Kugelkopfs mitrotieren, und zwar insbesondere wenn sich die weiche Innenschale am Innenrand bei hoher Belastung, insbesondere bei thermischer Belastung in den dort vorhandenen Hohlraum verformt und die Keilwirkung zu einem Verklemmen der Innenschale zwischen Kugelkopf und Außenschale führt.

Aus der DE-AS 24 34 490 ist ein Kugelgelenk mit einer Lagerschale bekannt, die zweiteilig aus einer innen sphärischen Innenschale und einer Außenschale ausgebildet ist. Die Innenschale aus einem hartelastischen Kunststoff wird von einer materialelastischen Außenschale getragen, die auf ihrer Außenseite Rippen zur Abstützung im Gelenkgehäuse hat. Die Außenschale verformt sich bei vorgespanntem Kugelkopf insbesondere im Bereich zwischen den Rippen, was auf der Innenschale die Ausbildung von Schmiertaschen zur Folge hat, die eine Verbesserung der Schmiermittelverteilung in der Kugellauffläche bewirken.

Die Gängigkeit dieses Kugelgelenkes ist auch in hohem Maße von der Vorspannung des Kugelkopfes abhängig. Bei dem vorbekannten Kugelgelenk unterliegt diese Vorspannung sehr hohen fertigungsbedingten Schwankungen. Maßschwankungen des Hohlraumes des Gelenkgehäuses beeinflussen die Vorspannung der Außenschale erheblich, wobei die Außenschale entweder direkt oder über die dünne Innenschale auf den Kugelkopf einwirkt.

Davon ausgehend liegt der Erfindung die **Aufgabe** zugrunde, ein technisch verbessertes Kugelgelenk zu schaffen, bei dem Maßschwankungen im Hohlraum des Gelenkgehäuses und der Außenabmessungen der Lagerschale einen praktisch vernachlässigbaren Einfluß auf die Vorspannung des Kugelkopfes haben und das im Fahrbetrieb auftretende dynamische und stoßförmige Belastungen elastisch auffängt.

Zur technischen **Lösung** dieser Aufgabe wird folgende Merkmalskombination vorgeschlagen:

a) Daß die Außenschale aus einem hartelastischen Kunststoff besteht;

b) daß die Innenschale an einer Stirnfläche Anschlagflächen hat und zwischen diesen mit elastisch verformbaren Erhebungen an der Außenschale abgestützt ist und

c) daß zwischen den elastisch verformbaren Erhebungen und den Anschlagflächen nutenartige Ausnehmungen ausgebildet sind, in die hinein die Erhebungen elastisch verformbar sind, wobei die Anschlagflächen bei vollständig in die Ausnehmungen hineinverformten Erhebungen die Außenschale berühren,

d) daß die Außenschale einteilig ausgebildet ist,

e) daß ihre deckelseitige Stirnseite mit einem umlaufenden Flansch zur Festlegung am Gelenkgehäuse versehen ist und

f) daß ihre kugelzapfenseitige Stirnseite frei ausläuft.

Bei einem nach dieser technischen Lehre ausgebildeten Kugelgelenk bedarf es keiner Verspannung der Lagerschale durch das Gelenkgehäuse mehr, um die gewünschte Vorspannung des Kugelkopfes zu erreichen. Die Vorspannung des Kugelkopfes wird insbesondere von der weichelastischen Innenschale bewirkt, welche bei eingesetztem Kugelkopf besonders an den Erhebungen um ein definiertes Maß elastisch zusammengedrückt wird. Durch die nutenartigen Ausnehmungen werden die Erhebungen vor einer plastischen Verformung geschützt, die insbesondere bei stoßförmigen Belastungen des Kugelgelenkes zu besorgen sind. Die Erhebungen können sich nämlich maximal in die nutenartigen Ausnehmungen hineinverformen, wobei sie noch keiner plastischen Verformung unterliegen. Bei diesem Verformungszustand berühren aber die Anschlagflächen die Außenschale und stützen die Innenschale an der Außenschale ab, so daß die Kraft in den Erhebungen nicht mehr anwächst.

Maßschwankungen des Gelenkgehäuses oder der Außenabmessungen der Lagerschale können über die relativ starre und dickwandige Außenschale nur geringe Maßänderungen im Bereich der Ausnehmung der Außenschale bewirken. Der Einfluß solcher Maßschwankungen auf die Vorspannung des Kugelkopfes im Bereich der sphärischen Innenfläche der Außenschale ist deshalb vernachlässigbar. Die Maßschwankungen der Innenschale und der Außenschale sind ebenfalls unerheblich, da diese mit hoher Genauigkeit gespritzt werden können. Dabei kann die Außenschale an dem umlaufenden Flansch fest eingespannt werden, ohne daß ihre Verformung im Bereich der Aufnahme für die Innenschale oder der sphärischen Innenfläche zu befürchten ist. Durch die einteilige Ausbildung der Außenschale und das freie Auslaufen der kugelzapfenseitigen Stirnseite ist ein Einfluß der Gehäusetiefe auf die Verspannung der Außenschale ausgeschlossen.

Bei einer praktischen Ausführungsform kann die Innenschale an ihrem Mantel in der Ausnehmung der Außenschale zentriert sein. Hierdurch wird die Vormontage der Innenschale erleichtert und ihr reproduzierbarer Sitz in der Ausnehmung der Außenschale gesichert.

Bei einer bevorzugten Ausgestaltung kann eine einteilige Außenschale an ihrer kugelzapfenseitigen Öffnung mehrfach in Längsrichtung geschlitzt werden, um das Einsetzen des Kugelkopfes zu erleichtern.

Wenn bei einer praktischen Ausführungsform die weiche Innenschale in eine zylindrische Ausnehmung der harten Außenschale eingebettet wird, dann kann sich die Innenschale auch bei hoher Belastung und insbesondere thermischer Belastung nicht zwischen Kugelkopf und Außenschale verklemmen, weil der Kugelkopf bereits ausreichend von der harten Außenschale umschlossen und abgestützt wird.

Weitere Einzelheiten und Vorteile des Gegenstandes der Erfindung ergeben sich aus der nachfolgenden Beschreibung der zugehörigen Zeichnungen, in denen eine bevorzugte Ausführungsform eines erfindungsgemäß ausgebildeten Kugelgelenkes schematisch dargestellt worden ist. In den Zeichnungen zeigen:

Fig. 1 ein Kugelgelenk im montierten Zustand und im Längsschnitt;
Fig. 2 dasselbe Kugelgelenk als Sprengbild.

In einem Gelenkgehäuse 1 ist ein Kugelkopf 2 mit einem Kugelzapfen 3 unter Zwischenlage einer zweiteiligen Lagerschale aus einer Außenschale 4 und einer Innenschale 5 angeordnet. Die Innenschale 5 hat einen zylindrischen Mantel 6 und ist in eine Ausnehmung 7 der Außenschale 4 eingesetzt. Die Außenschale 4 hat oben einen umlaufenden Flansch 8, der auf einer Schulter 9 des Gelenkgehäuses 1 aufliegt. An seiner Oberseite ist das Kugelgelenk mit einer eingewalzten Kappe 10 verschlossen, unter der in ein Fettreservoir 11 liegt.

An ihrer kugelzapfenseitigen Stirnseite 12 läuft die Außenschale 4 frei aus, wobei ein Spalt 13 zwischen der Stirnseite 12 und einem Gehäuseabsatz 14 größer ist, als die Maßschwankungen der Gehäusetiefe des Gelenkgehäuses 1. An ihrem kugelzapfenseitigen Ende ist die Außenschale 4 mit mehreren Schlitzen 15 versehen, die gleichmäßig über ihren Umfang verteilt sind.

Die Außenschale 4 liegt mit einer Innenfläche 16 und die Innenschale 5 mit einer Innenfläche 17 an dem Kugelkopf 2 an.

Die Außenschale 4 besteht aus einem hartelastischen Kunststoff, beispielsweise Polyoxymethylen (POM). Die Innenschale 5 besteht aus einem weichelastischen Kunststoff, beispielsweise Polyurethan (PUR).

Die Innenschale 5 hat an ihrer Stirnfläche 18 Erhebungen 19 in Gestalt radial verlaufender Stege. Diese Erhebungen sind durch Ausnehmungen 20 von kürzeren Anschlagflächen 21 getrennt.

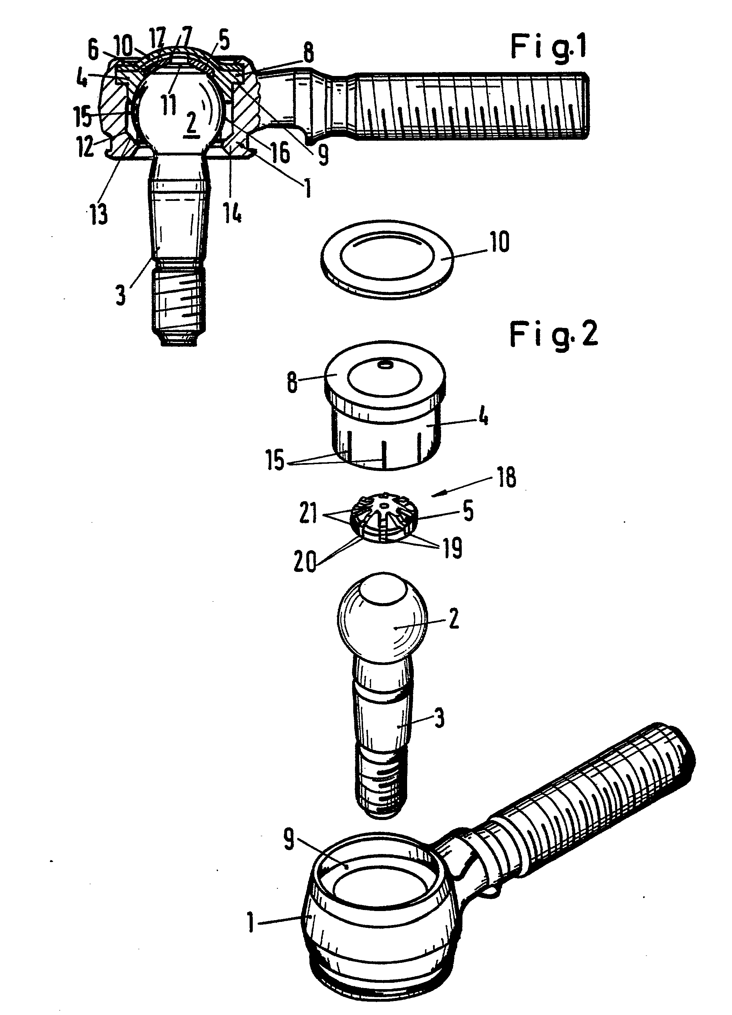

Bei der Montage des Kugelgelenkes, wie sie im Sprengbild der Fig. 2 schematisch dargestellt worden ist, wird zunächst der Kugelkopf 2 in die vormontierte Lagerschale aus Außenschale 4 und Innenschale 5 eingesetzt. Die Montage des Kugelkopfes 2 wird durch die Schlitze 15 erleichtert. Nun werden Kugelkopf, Lagerschale und Kappe 10 in das Gelenkgehäuse 1 eingesetzt und durch Verspannen des Flansches 8 festgelegt.

Beim Festlegen der Außenschale 4 wird die Ausnehmung 7 praktisch nicht verformt, so daß Maßschwankungen der Gehäusebohrung oder der Lagerschale praktisch keinen Einfluß auf die Vorspannung der Innenschale haben. Maßschwankungen der Gehäusetiefe sind ohnehin ohne Einfluß, da die Stirnseiten der Lagerschale nicht gegeneinander verspannt sind. In Verbindung mit der Hartelastizität der Außenschale 4 ergibt sich eine sehr gute Maßhaltigkeit der Innenfläche 16 und der Ausnehmung 7.

Beim Zusammenbau des Kugelgelenkes wird die Innenschale 5 um ein sehr gut reproduzierbares Maß elastisch zusammengedrückt, wobei sie eine Kraft auf den Kugelkopf 2 ausübt. Die Vorspannung des Kugelkopfes 2 wird durch diese Kraft weitgehend festgelegt und hat deshalb ebenfalls eine geringe Toleranz. Gefördert wird die Reproduzierbarkeit der Vorspannung des Kugelkopfes außerdem durch die Zentrierung der Innenschale 5 an ihrem zylindrischen Mantel 6.

Die Elastizität der Innenschale 5 kann sowohl durch Wahl des Materials, als auch durch formgestalterische Maßnahmen beeinflußt werden. Die gezeigte Ausführungsform ist besonders zur Dämpfung starker Axialstöße geeignet. Bei der Montage werden die langen Erhebungen 19 zunächst teilweise elastisch zusammengedrückt, wobei sie an ihren Flanken in den nutenartigen Ausnehmungen 20 geringfügig ausgebaucht werden. Stöße geringer Höhe führen zu einer weiteren elastischen Verformung der Erhebungen 19. Bei großen Stößen kommen die Flanken der Erhebungen 19 in den nutenartigen Ausnehmungen 20 zur Anlage und zusätzlich der kürzeren Anschlagflächen 21 zur Anlage an der Außenschale, wobei sie die Erhebungen 19 vor plastischer Verformung schützen.

<u>Bezugszeichenliste</u>

1 Gelenkgehäuse
2 Kugelkopf
3 Kugelzapfen
4 Außenschale
5 Innenschale
6 Mantel
7 Ausnehmung

8 Flansch
9 Schulter
10 Kappe
11 Fettreservoir
12 Stirnseite
13 Spalt
14 Gehäuseabsatz
15 Schlitz
16 Innenfläche
17 Innenfläche
18 Stirnfläche
19 Erhebung
20 Ausnehmung
21 Anschlagfläche

## Patentansprüche

1. Kugelgelenk für Übertragungsgestänge in Kraftfahrzeugen mit einer zwischen einem Kugelkopf (2) und einem Gelenkgehäuse (1) angeordneten Lagerschale aus Kunststoff, wobei die einen Radialdruck auf den Kugelkopf ausübende Lagerschale eine Außenschale (4) mit einer sphärischen Innenfläche (16) und eine Innenschale (5) mit ebenfalls sphärischer Innenfläche (17) hat und die Innenflächen (16, 17) eine Gleitfläche für den Kugelkopf (2) bilden, wobei die Außenschale die Innenschale in einer Ausnehmung trägt und wobei die Innenschale (5) aus einem weichelastischen Kunststoff besteht und solche Abmessungen hat, daß sie bei nicht eingesetztem Kugelkopf (2) in eine, von der Innenfläche (16) der Außenschale (4) definierte Kugel hineinragt und bei eingesetztem Kugelkopf (2) elastisch verformt ist, dadurch gekennzeichnet, daß die Außenschale (4) aus einem hartelastischen Kunststoff besteht, daß die Innenschale (5) an einer Stirnfläche (18) Anschlagflächen (21) hat und mit elastisch verformbaren Erhebungen (19) an der Außenschale (4) abgestützt ist, daß zwischen den elastisch verformbaren Erhebungen (19) und den Anschlagflächen (21) nutenartige Ausnehmungen (20) ausgebildet sind, in die hinein die Erhebungen (19) elastisch verformbar sind, wobei die Anschlagflächen (21) bei vollständig in die Ausnehmungen (20) hineinverformten Erhebungen (19) die Außenschale (4) berühren, daß die Außenschale (4) einteilig ausgebildet ist, daß ihre deckelseitige Stirnseite mit einem umlaufenden Flansch (8) zur Festlegung am Gelenkgehäuse (1) versehen ist und daß ihre kugelzapfenseitige Stirnseite (12) frei ausläuft.

2. Kugelgelenk nach Anspruch 1, dadurch gekennzeichnet, daß die Innenschale (5) an ihrem Mantel (6) in der Ausnehmung (7) der Außenschale (4) zentriert ist.

3. Kugelgelenk nach einem der Ansprüche 1 oder 2, dadurch gekennzeichnet, daß die Außenschale (4) an ihrer kugelzapfenseitigen Öffnung mehrere Schlitze (15) in Längsrichtung hat.

4. Kugelgelenk nach Anspruch 1, dadurch gekennzeichnet, daß die Innenschale (5) in eine zylindrische Ausnehmung der Außenschale (4) eingebettet ist.

## Claims

1. Ball joint for transmission linkages in motor vehicles having a bearing shell made of plastic arranged between a ball head (2) and a joint housing (1), the bearing shell, which exerts a radial pressure upon the ball head, having an outer shell (4) with a spherical inner face (16) and an inner shell (5) also with a spherical inner face (17) and the inner faces (16, 17) forming a sliding surface for the ball head (2), the outer shell carrying the inner shell in a recess and the inner shell (5) consisting of a soft elastic plastic and having such that it projects into a ball defined by the inner face (16) of the outer shell (4) when the ball head (2) is not inserted and is elastically deformed when the ball head (2) is inserted, characterized in that the outer shell (4) consists of a hard elastic plastic, that the inner shell (5) has stop surfaces (21) on an end face (18) and is braced against the outer shell (4) by elastically deformable protuberances (19), that groovelike recesses (20), into which the protuberances (19) are elastically deformable, are constructed between the elastically deformable protuberances (19) and the stop surfaces (21), the stop surfaces (21) touching the outer shell (4) when the protuberances (19) are fully deformed into the recesses (20), that the outer shell (4) is of one-part construction, that its cover side end face is provided with an all-round flange (8) for fastening to the joint housing (1), and that its ball spigot side end face (12) issues freely.

2. Ball joint according to Claim 1, characterized in that the inner shell (5) is centred by its envelope (6) in the recess (7) of the outer shell (4).

3. Ball joint according to one of Claims 1 or 2, characterized in that the outer shell (4) has a plurality of slits (15) in the longitudinal direction at its ball spigot side aperture.

4. Ball joint according to Claim 1, characterized in that the inner shell (5) is embedded into a cylindrical recess of the outer shell (4).

## Revendications

1. Articulation à rotule pour bielle d'accouplement dans un véhicule à moteur, comportant un coussinet en matière plastique disposé entre une tête sphérique (2) et un logement d'articulation (1), lequel coussinet, qui exerce une pression radiale sur la tête sphérique, comportant une coupelle extérieure (4) à surface intérieure sphérique (16) et une coupelle intérieure (5) à surface intérieure également sphérique (17), et les surfaces intérieures (16, 17) formant une surface de glissement pour la tête sphérique (2), la coupelle extérieure portant la coupelle intérieure dans un évidement et la coupelle intérieure (5) étant constituée d'une matière plastique souple et ayant des dimensions telles qu'elle pénètre dans une sphère définie par la surface intérieure (16) de la coupelle extérieure (4) lorsque la tête sphérique (2) n'est pas en place, et qu'elle soit déformée élastiquement lorsque la tête sphérique (2) est en place, caractérisée en ce que la coupelle extérieure (4) est formée d'une matière plastique élastique dure, en ce que la coupelle intérieure (5) possède des surfaces d'arrêt (21) sur une surface frontale (18) et porte sur la coupelle extérieure (4) par des saillies élastiquement déformables (19), en ce que, entre les saillies élastiquement déformables (19) et les surfaces d'arrêt (21), sont formés des évidements (20) en forme de rainure, dans lesquels peuvent pénétrer en se déformant élastiquement les saillies (19), les surfaces d'arrêt (21) entrant en contact avec la coupelle extérieure (4) lorsque les saillies (19) pénètrent entièrement par déformation dans les évidements (20), en ce que la coupelle extérieure (4) est réalisée d'une seule pièce, en ce que sa face frontale côté couvercle présente une bride circulaire (8) pour la fixation au logement (1) de l'articulation, et en ce que sa face frontale (12), côté pivot à rotule, se termine librement.

2. Articulation à rotule selon la revendication 1, caractérisée en ce que la coupelle intérieure (5) est centrée par son enveloppe (6) dans l'évidement (7) de la coupelle extérieure (4).

3. Articulation à rotule selon la revendication 1 ou 2, caractérisé en ce que la coupelle extérieure (4) présente plusieurs fentes longitudinales (15) à son ouverture côté pivot à rotule.

4. Articulation à rotule selon la revendication 1, caractérisée en ce que la coupelle intérieure (5) est emboîtée dans un évidement cylindrique de la coupelle extérieure (4).

Fig.1

Fig.2